(19) Europäisches Patentamt
European Patent Office
Office européen des brevets

(11) EP 4 055 218 B1

(12) **EUROPEAN PATENT SPECIFICATION**

(45) Date of publication and mention of the grant of the patent:
**28.01.2026 Bulletin 2026/05**

(21) Application number: **20811496.7**

(22) Date of filing: **03.11.2020**

(51) International Patent Classification (IPC):
***D02G 3/44*** *(2006.01)* ***A41D 31/08*** *(2019.01)*

(52) Cooperative Patent Classification (CPC):
**D02G 3/443; A41D 31/085**

(86) International application number:
**PCT/US2020/058678**

(87) International publication number:
**WO 2021/091877 (14.05.2021 Gazette 2021/19)**

(54) **FLAME RETARDANT COMPOSITE ARTICLES AND METHODS FOR REDUCING EXPOSURE TO FLAMES**

FLAMMVERZÖGERNDE VERBUNDARTIKEL UND VERFAHREN ZUR VERMINDERUNG DER FLAMMENEXPOSITION

ARTICLES COMPOSITES IGNIFUGES ET PROCÉDÉS DE RÉDUCTION D'EXPOSITION AUX FLAMMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2019 US 201962930102 P**

(43) Date of publication of application:
**14.09.2022 Bulletin 2022/37**

(73) Proprietor: **W. L. Gore & Associates, Inc.**
**Newark, DE 19711 (US)**

(72) Inventor: **ARIFOGLU, Mustafa**
**Newark, DE 19711 (US)**

(74) Representative: **HGF**
**HGF Limited**
**4th Floor, 1 City Square**
**Leeds LS1 2AL (GB)**

(56) References cited:
**WO-A1-2009/055046**
**WO-A1-2009/055047**
**WO-A1-2011/050376**
**WO-A2-2012/121759**
**US-A1- 2009 110 919**
**US-A1- 2011 281 097**
**US-A1- 2013 065 470**
**US-A1- 2019 264 382**
**US-B1- 7 713 891**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 055 218 B1

## Description

### TECHNICAL FIELD

This disclosure relates to composite articles comprising a textile layer containing heat stable spun yarns that exhibit low flammability and low thermal shrinkage resistance. In particular, the articles can be National Fire Protection Agency ("NFPA") 2112 compliant.

### BACKGROUND OF THE DISCLOSURE

In hazardous environments where infrequent and short duration exposure to fire and extreme heat is possible, such as those encountered by search and rescue and police, protective materials are desirable to reduce burn injuries. Protective gear for persons exposed to these conditions should provide some enhanced protection compared with conventional technical garments to allow the wearer to get away from the hazard quickly and safely, rather than to combat the hazard. However, given that the fire and extreme heat exposure is expected to be only occasional, the weight and usability of the garment should be similar to those of conventional garments. Similarly, the weight, appearance and feel of the garment should be similar to conventional garments with good colorfastness, printability, and abrasion resistance. The cost for waterproof, flame retardant, protective clothing has also been an important consideration for the large number of hazardous exposure applications outside fire protection, thereby precluding the use of typical, inherently flame retardant textiles such as those used in fire-fighting community.

Traditionally, flame retardant (FR) protective garments have been made with an outermost layer consisting of a non-combustible, non-melting fabric made of, for example, an aramid, a polyamide-imide (PAI), a polybenzimidazole (PBI), a poly p-phenylene-2,6-benzobisoxazole (PBO), a modacrylic blend, a polyamine, a carbon, a polyacrylonitrile (PAN), or blends and combinations thereof. These fibers may be inherently flame retardant but may have several limitations. Specifically, these fibers may be very expensive, difficult to dye and print, and may not have adequate abrasion resistance. Additionally, these fibers pick up more water and offer unsatisfactory tactile comfort as compared to nylon or similar thermoplastic based fabrics.

As part of a solution, thermoplastic and/or meltable materials have been proposed in flame retardant composite materials. For example, US Publication No. 2009/0110919, describes multilayer burn protective materials that can contain an outer layer comprising a flammable, meltable material, and a layer of heat reactive material comprising a polymer resin-expandable graphite mixture. As another example, US Pub. No. 2013/004747 describes an article comprising a textile made of fibers/filaments having a partially internal discontinuous pattern of an impregnating material which penetrates the textile. The impregnating material may contain at least one additive comprising expandable graphite material that can work as a fire blocker in case of heat contact. The non-impregnated areas are air permeable and the textile is water vapor permeable and has reduced water absorption and re-dry time. WO2009055046 describes a mixture comprising an expandable graphite and a polymer resin wherein the polymer resin-expandable graphite mixture has a volume increase and structural integrity after exposure to heat.

One desirable property for all flame retardant articles is low thermal shrinkage when exposed to flame and/or high temperatures. The National Fire Protection Agency ("NFPA") 2112 standard includes this low thermal shrinkage as a requirement for compliance. While thermoplastic and/or meltable fibers have been used in flame retardant garments, they often exhibit high thermal shrinkage when exposed to high temperatures or flame. It can be a challenge to use these materials in flame retardant materials and garments where low thermal shrinkage is desired because the thermal shrinkage of a thermoplastic or meltable layer can significantly affect the thermal shrinkage performance of the entire composite. There continues to be a need for flame retardant textiles that utilize thermoplastic polymers without high thermal shrinkage. Additionally, solutions that allow for the use of thermoplastic materials in flame retardant garments that meet NFPA 2112 compliance standards may be desirable.

### SUMMARY OF THE DISCLOSURE

The present disclosure is directed toward a composite article as described by the appended claims, comprising:

a) a textile layer comprising:

(i) a heat stable spun yarn comprising one or more heat stable staple fibers,

wherein the heat stable spun yarn comprises a heat stable, non-meltable fiber, and
wherein the heat stable spun yarn does not shrink more than 5% in an oven test at 260°C for 5 minutes, the oven test being in accordance with the yarn shrink test described in the description, and

(ii) at least one other yarn or filament that is different than the heat stable spun yarn,

wherein the at least one other yarn or filament is a meltable yarn or filament,
wherein the textile layer comprises in a range of from 10 percent to 30 percent by weight of the heat stable spun yarns, the percent by weight based on a total weight of the textile layer, and

b) an adhesive layer bonded to the textile layer;
wherein the adhesive layer comprises a polymer resin and an expandable graphite,
wherein the expandable graphite expands at least 900 μm upon heating to 280°C when measured in accordance with the expansion test described in the description; and

wherein the article has a shrinkage, in at least one direction, of less than 21 percent in the thermal shrinkage test according to ASTM 2894-14.
The disclosed composite articles can be useful for producing garments or other fire retardant textiles that resist thermal shrinkage when exposed to relatively high temperatures and, if exposed to a flame, produce a layer of char material which does not support the continued burning of the material and insulates the underlying surface from at least some of the heat. It has been surprisingly found that the use of heat stable spun yarns, comprising one or more heat stable staple fibers can provide a resistance to shrinking to a composite article. While the majority of the article comprises materials that are meltable and flammable, the composite article resists shrinking, melting and burning.
The heat stable, non-meltable fiber can be a cotton, a flame retardant cotton, a rayon, a flame retardant rayon, a flame retardant viscose, a modacryl, an aramid, a polyamide-imide (PAI), a polybenzimidazole (PBI), a polybenzoxazole (PBO), a polyphenylene sulfide (PPS), a polyethylene imide (PEI), a wool, a carbon or a combination thereof.
The textile layer can be a woven or a knit textile.
The composite article can comprise one or more additional layers, wherein the additional layer comprises a thermally stable textile, a waterproof breathable material, a thermally stable film, or a combination thereof.
The one or more additional layer can comprise expanded polytetrafluoroethylene (PTFE).
The meltable yarn or filament can be a thermoplastic, a polyamide, a nylon, a nylon 6, a nylon 6,6, a polyester, a polyethylene terephthalate, a polytrimethylene terephthalate, a polyurethane, a polyolefin, a polyethylene, a polypropylene, an acrylic or a combination thereof.
The meltable yarn can be a polyamide or a polyester yarn.
The heat stable spun yarn can comprise from 10 percent to 20 percent by weight of the textile layer, based on the total weight of the textile layer.
A combination of the cover material and the adhesive layer can form a char when the article is exposed to a temperature above 300°C.
The composite article can be a garment wherein the textile layer is oriented away from the body of the wearer.
The heat stable spun yarn can be core spun.
The heat stable spun yarn can provide antistatic properties.

## DESCRIPTION OF THE DRAWINGS

The operation of the present invention should become apparent from the following description when considered in conjunction with the accompanying drawings, in which:

Figure 1 is a schematic illustration of a cross-sectional view of one embodiment described herein.
Figure 2 is a schematic illustration of a cross-sectional view of another embodiment described herein.
Figure 3 is a schematic illustration of a cross-sectional view of another embodiment described herein.
Figure 4 is a schematic illustration of a cross-sectional view of another embodiment described herein.
Figure 5 is a schematic illustration of a cross-sectional view of another embodiment described herein.
Figure 6A is a schematic illustration of one embodiment of a polymer resin-expandable graphite applied as discrete dots.
Figure 6B is a schematic illustration of one embodiment of a pattern of a polymer resin-expandable graphite applied in a grid.

## DETAILED DESCRIPTION OF THE DISCLOSURE

A composite article that exhibits low thermal shrinkage is described herein. The composite article described herein can be relatively lightweight and still retain excellent flame resistance and low thermal shrinkage. In addition, embodiments maintain the appearance and weight of a traditional garment. The composite article also provides excellent

colorfastness, printing, abrasion resistance, and relatively low cost. In some embodiments, the article can be compliant with at least the low thermal shrinkage requirement of National Fire Protection Agency ("NFPA") 2112. The NFPA 2112 Standard provides minimum requirements for the design, construction, evaluation, and certification of flame-retardant clothing for use by industrial personnel.

The composite article comprises a) a textile layer comprising a heat stable spun yarn that does not shrink more than 5% in a 260°C oven test, wherein the heat stable spun yarn comprises one or more heat stable staple fibers; and b) an adhesive layer bonded to the textile layer; wherein the adhesive layer comprises a polymer resin and an expandable graphite, wherein the expandable graphite expands at least 900 micrometers ($\mu$m) upon heating to 280°C; and wherein the composite article has a shrinkage, at least in one direction, of less than 21 percent as measured by a thermal shrinkage test according to ASTM 2894-14. In other embodiments, the composite article has a shrinkage, at least in one direction of less than 15 percent or less than 10 percent as measured by the thermal shrinkage test according to ASTM 2894-14.

As used herein, the phrase "heat stable spun yarn" means a yarn formed from heat stable staple fibers. The heat stable staple fibers are one or more heat stable, non-meltable fibers. In some embodiments, the heat stable spun yarn can be formed from a cotton, a flame retardant cotton, a rayon, a flame retardant rayon, a flame retardant viscose, a modacryl, an aramid, a polyamide-imide (PAI), a polybenzimidazole (PBI), a polybenzoxazole (PBO), a polyphenylene sulfide (PPS), a polyethylene imide (PEI), a wool, carbon staple fibers or a combination thereof.

As used herein, the term "filament" means an endless or quasi-endless, elongated member of natural or man-made material. As used herein, the term filament will include both monofilament and multifilament materials unless it is specifically stated otherwise.

As used herein, the term "monofilament" means a single filament.

As used herein, the term "multifilament" means a collection of filaments in a substantially parallel arrangement, although the filaments can be twisted together about a common axis.

As used herein, the term "fiber" or "staple fiber" means a relatively short, elongated member of natural or synthetic material. A fiber will typically be of a discrete length (usually less than 50 centimeters) and the length being much greater than the height and width dimensions.

Heat stable spun yarns can be prepared by any method known in the art.

As used herein, the phrases "adhesive layer", "heat reactive material" and "polymer resin-expandable graphite mixture" are used interchangeably and mean an adhesive composition and/or a layer thereof comprising a polymer resin and an expandable graphite. In the present disclosure, the adhesive layer comprising the polymer resin and expandable graphite is generally adhered to at least one surface of the textile layer comprising the heat stable spun yarn. When the composite article is formed into, for example, a garment, the textile layer is a layer that is on the outer side of the garment and the adhesive layer is on an inner side of the textile layer, wherein the inner and outer orientations are in relation to the wearer of the garment. Specifically, the inner side is a side closest to the wearer of the garment while the outer side is a side opposite the wearer of the garment. The phrase "additional adhesive layer" means a layer of a textile adhesive, wherein the textile adhesive is a polymer resin, optionally containing an expandable graphite.

The composite article (100) comprises a textile (120) comprising a heat stable spun yarn. The heat stable spun yarn comprises heat stable staple fibers.

In some embodiments, the heat stable fibers of the heat stable spun yarn can comprise a material that does not exhibit thermal shrinking. In other embodiments, the heat stable fibers can comprise a material that undergoes limited or low thermal shrinking, such as shrinking a distance of less than 10 percent, or less than 5 percent, or less than 8 percent, or less than 6 percent when the heat stable spun yarn is exposed to 260°C for 5 minutes, according to ASTM 2894-14. In some embodiments, the material of the heat stable fibers shrinks from 0.01 percent to 9.9 percent, or from 0.1 percent to 9.9 percent, or from 1 percent to 9.9 percent, or from 5 percent to 9.9 percent, or from 0.01 percent to 8 percent, or from 0.01 percent to 5 percent, or from 0.01 to 4 percent. When used in the composite articles, it is believed that the lack of thermal shrinking of the heat stable fibers limits or prevents the thermal shrinking of the heat stable spun yarn and, in turn, limits or prevents the thermal shrinkage of the textile layer comprising the heat stable spun yarn, and finally, limits or prevents the thermal shrinkage of the composite article. The heat stable fibers comprise a heat stable non-meltable material. As non-limiting examples, the heat stable fibers can comprise a cotton, a flame retardant cotton, rayon, a flame retardant rayon, a flame retardant viscose, a modacryl, an aramid, a polyamide-imide (PAI), a polybenzimidazole (PBI), a polybenzoxazole (PBO), a polyphenylene sulfide (PPS), a polyethylene imide (PEI), a wool, a carbon or a combination thereof. In some embodiments, the heat stable fibers comprise TWARON® p-aramid material or TECHNORA® p-aramid material, both available from Teijin Aramid, Conyers, Georgia, USA. In other embodiments, the heat stable fibers comprise NOMEX® m-aramid material, available from DuPont, Wilmington, Delaware, USA. In another embodiment, the heat stable fibers comprise KERMEL®, a polyamide-imide, available from Kermel, Colmar, France.

In some embodiments, the heat stable spun yarn can also comprise one or more non-heat stable materials that can be a thermoplastic material or a meltable material in the form of one or more of a filament, a fiber, a coating or a combination thereof. The non-heat stable material can comprise a material that exhibits high thermal shrinking, such as shrinking a distance of 20 percent, or 15 percent, or 10 percent, or more in any direction when the heat stable spun yarn is

exposed to 260°C for 5 minutes. In one embodiment, the non-heat stable material can be one material. In other embodiments, the non-heat stable material can be two or more materials. As non-limiting examples, the non-heat stable material can comprise a thermoplastic, a polyamide, a polyester, a polyolefin, an acrylic or a combination thereof. In a preferred embodiment, the non-heat stable material can comprise a polyamide or a polyester or a combination thereof.

The heat stable spun yarn is used to produce the textile or textile layer (120). Since it is a yarn, the heat stable spun yarn can be used in known weaving and knitting processes to form the desired textile layer (120) as a woven textile or a knit textile. For example, a woven textile comprising a heat stable spun yarn may have a plain weave, a twill, a satin, a ripstop, or a herringbone construction, or combinations thereof. In other embodiments, a knit textile comprising the heat stable spun yarn can be a warp knit, a weft knit, a circular knit, a jersey knit, a ribbed knit, an interlock knit or a terry knit textile. The textile (120) comprises the heat stable spun yarn and further comprises at least one other yarn or filament that is different than the heat stable spun yarn.

Textiles comprising the heat stable spun yarn can be thin and relatively lightweight to reduce the weight of the composite article. In some embodiments, the textile comprising the covered core yarn can be lightweight, having a weight greater than or equal to 40 grams/square meter (g/$m^2$), up to about 220 g/$m^2$. In embodiments, the composite article comprises a textile comprising a covered core yarn which is knit or woven, wherein the textile has a weight in the range of from 210 to 220 g/$m^2$, or 200 to 210 g/$m^2$, or 190 to 200 g/$m^2$, or 180 to 190 g/$m^2$, or 170 to 180 g/$m^2$, or 160 to 170 g/$m^2$, or 150 to 160 g/$m^2$, or 140 to 150 g/$m^2$, or 130 to 140 g/$m^2$, or 120 to 130 g/$m^2$, or 110 to 120 g/$m^2$, or 100 to 110 g/$m^2$, or 90 to 100 g/$m^2$, or 80 to 90 g/$m^2$, or 70 to 80 g/$m^2$, or 60 to 70 g/$m^2$, or 50 to 60 g/$m^2$, or 40 to 50 g/$m^2$. In still further embodiments, the textile has a weight of 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89 or 90 g/$m^2$.

In some embodiments, the textile comprising the heat stable spun yarn can comprise a plurality of heat stable spun yarns in the warp direction. In other embodiments, the textile comprising the heat stable spun yarn can comprise a plurality of heat stable spun yarns in the fill or weft direction. And in some embodiments, the textile comprising the heat stable spun yarn can comprise a plurality of the heat stable spun yarns in the warp direction and a plurality of the heat stable spun yarns in the fill or weft direction. some embodiments, there is a predetermined gap between each heat stable spun yarn in the textile, such as every third pick is a heat stable spun yarn, every fifth pick is the heat stable spun yarn, or every tenth pick is the heat stable spun yarn. Similarly in certain embodiments, every third end is the heat stable spun yarn, every fifth end is the heat stable spun yarn, or every tenth end is the heat stable spun yarn, for example. Other variations of the amount and placement of the heat stable spun yarn in a textile would be apparent and readily achievable to one of ordinary skill in the art.

The textile comprising the heat stable spun yarn further comprises at least one other filament or yarn. The textile comprises from 10 percent to 30 percent or from 10 percent to 20 percent by weight of the heat stable spun yarn, based on the total weight of the textile. The at least one other filament or yarn is a meltable filament or a yarn. For example, the at least one other filament or yarn can be those filaments or yarns that are meltable according to the Melting and Thermal Stability Test and can include, for example, a polyamide, for example, a nylon, a nylon 6, a nylon 6,6, a polyester, a polyethylene terephthalate, a polytrimethylene terephthalate, a polyurethane, a polyolefin, a polyethylene, a polypropylene, an acrylic or a combination thereof. The textile layer comprising a heat stable spun yarn can be a breathable layer, for example, having a moisture vapor transmission rate (MVTR) of greater than or equal to 1000 g/$m^2$/24hr or a non-breathable layer.

The composite article (100) also comprises an adhesive or adhesive layer (130) that is bonded to the textile layer (120) comprising the heat stable spun yarn. The adhesive layer (130) can be a thermoplastic or a cross-linkable polymer, for example, a polyester, a polyether, a polyurethane, a polyamide, an acrylic, a vinyl polymer, a polyolefin, a silicone, an epoxy or a combination thereof. As an example of an adhesive that is a combination, the adhesive can be a hydroxyl functional polymer that is crosslinked by a polyisocyanate, thereby forming a polyester urethane copolymer. In other embodiments, the adhesive can be a flame retardant adhesive or an adhesive comprising a heat reactive material. Suitable flame retardant adhesives can include any of the adhesive polymers listed above that further comprise one or more flame retardant material. Suitable flame retardant materials can be, for example one or more of a chlorinated compound, a brominated compound, an antimony oxide, an organic phosphorous-based compounds, a zinc borate, an ammonium polyphosphate, a melamine cyanurate, a melamine polyphosphate, a molybdenum compound, a alumina trihydrate, a magnesium hydroxide, a triphenyl phosphate (TPP), a resorcinol bis-(diphenylphosphate) (RDP), a bisphenol-A (diphenylphosphate) (BADP), a tricresyl phosphate (TCP), an organophosphonate, an organophosphinate, or a phosphonate ester having a general formula of (I):

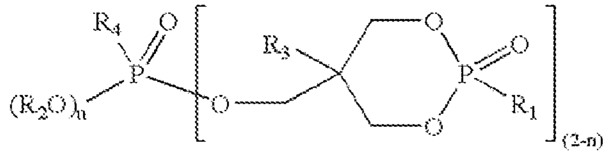

(I)

wherein n = 0 or 1, $R_1$ and $R_2$ are $C_1$-$C_4$ alkyl, $R_3$ is H or $C_1$-$C_4$ alkyl, and $R_4$ is a linear or branched alkyl. A combination of any of the above flame retardant materials can also be used. Specific embodiments of (I) can include, for example, methyl-bis((5-ethyl-2-methyl-2-oxido-1,3,2-dioxaphosphorinan-5-yl) methyl) ester and methyl (5-ethyl-2-methyl-2-oxido-1,3,2-dioxaphosphorinan-5-yl) methyl methylphosphonate or a combination thereof. The flame retardant material or materials may be present in the adhesive material in an amount of between 1 and 50 percent by weight, 10 to 50 percent by weight, 25 to 50 percent by weight, 30 to 50 percent by weight, 40 to 50 percent by weight, 10 to 40 percent by weight, 10 to 35 percent by weight, 10 to 20 percent by weight, 10 to 15 percent by weight, 25 to 45 percent by weight, 35 to 40 percent by weight, 15 to 25 percent by weight, or 20 to 30 percent by weight, based on the total amount of the adhesive material and the flame retardant material.

The adhesive layer comprises a polymer resin and an expandable graphite that expands at least 900μm upon heating to 280°C. The expandable graphite can have an average expansion rate of at least 9 micrometer/°C (μm/°C) when tested according to the Expansion test disclosed herein. Depending on the desired properties of the composite article, it may be desirable to use an expandable graphite having an expansion rate greater than 9 μm/°C between 180°C and 280°C, or an expansion rate greater than 12μm/°C between 180°C and 280°C, or an expansion rate greater than 15μm/°C between 180°C and 280°C. One expandable graphite suitable for use in certain embodiments expands by at least 900 microns in a thermo-mechanical analysis (TMA) expansion test described herein when heated to 280°C. Another expandable graphite suitable for use in certain embodiments expands by at least 400 microns in the TMA expansion test described herein when heated to 240°C. An expandable graphite particle size suitable for the adhesive should be chosen so that the polymer resin-expandable graphite mixture may be applied with the selected application method. For example, where the adhesive is applied by a gravure printing technique, the expandable graphite particle size should be small enough to fit in the gravure cells.

In some embodiments, the polymer resins are polymer resins that are adhesive and have a melt or softening temperature of less than 280°C. In some embodiments, the polymer resins have a melt temperatures of 1°C to 280°C, or 50°C to 280°C, or 100°C to 280°C, or 150°C to 218°C, or 200°C to 280°C, or 1°C to 250°C, or 1°C to 200°C, or 1°C to 175°C, or 1°C to 125°C, or 1°C to 80°C, or 1°C to 25°C. In some embodiments, the polymer resins are sufficiently flowable or deformable to allow the expandable graphite to expand substantially upon heat exposure at or below 300°C, preferably at or below 280°C. It may be desirable that the extensional viscosity of a polymer resin is low enough to allow for the expansion of expandable graphite and high enough to maintain the structural integrity of the heat reactive material after expansion of the mixture of polymer resin and expandable graphite. In other embodiments a polymer resin is used which has a storage modulus between $10^3$ and $10^8$ dyne/cm$^2$ and Tan delta between 0.1 and 10 at 200°C. In another embodiment a polymer resin is used that has a storage modulus between $10^3$ and $10^6$ dyne/cm$^2$. In another embodiment a polymer resin is used that has a storage modulus between $10^3$ and $10^4$ dyne/cm$^2$. In another embodiment a polymer resin is used that has a storage modulus between $10^4$ and $10^8$ dyne/cm$^2$. In another embodiment a polymer resin is used that has a storage modulus between $10^5$ and $10^8$ dyne/cm$^2$. In another embodiment a polymer resin is used that has a storage modulus between $10^7$ and $10^8$ dyne/cm$^2$. Polymer resins suitable for use in some embodiments are elastomeric. Other polymer resins suitable for use in some embodiments are cross-linkable, such as crosslinkable polyurethane, for example, MOR-MELT® R7001E (from Rohm & Haas, USA). In other embodiments, suitable polymer resins are thermoplastic having a melt temperature between 50°C and 250°C, such as DESMOMELT® VP KA 8702 (from Bayer Material Science LLC, Pittsburg, Pennsylvania, USA). Polymer resins suitable for use in embodiments described herein comprise polymers which include but are not limited to a polyester, a polyether, a polyurethane, a polyamide, an acrylic, a vinyl polymer, a polyolefin, a silicone, an epoxy or a combination thereof. Flame retardant materials optionally may be incorporated in the polymer resin. In one embodiment, the polymer resins may include at least one component or additive selected from the group consisting of a chlorinated compound, a brominated compound, an antimony oxide, an organic phosphorous-based compound, a zinc borate, an ammonium polyphosphate, a melamine cyanurate, a melamine polyphosphate, a molybdenum compound, a alumina trihydrate, a magnesium hydroxide, a triphenyl phosphate (TPP), a resorcinol bis-(diphenylphosphate) (RDP), a bisphenol-A (diphenylphosphate) (BADP), a tricresyl phosphate (TCP), an organophosphonate, an organophosphinate, and/or a phosphonate ester having a general formula of (I) which may enhance the flame retardant property of the composite articles. In embodiments, the polymer resin may contain and/or function as an adhesive, for example, for

attaching the textile layer comprising a heat stable spun yarn to an inner layer.

In some embodiments, upon exposure of the composite article to flames and/or heat, for example, a temperature above 300°C, the textile layer comprising the heat stable spun yarn, melts and mixes with the heat reactive material. At the same time, the expandable graphite expands. This process forms a char comprised of the fibers or yarns of the textile layer that are not the heat stable spun yarns and the heat reactive material. The char formed in this process forms a layer that does not support combustion and therefore, any flame extinguishes relatively quickly. The material resulting from high temperature exposure of the textile layer comprising the heat stable spun yarn and the heat reactive material is a heterogeneous melt mixture of the non-heat stable yarn material and heat reactive material. In some embodiments, composite articles has a break-open time that is increased by at least 20 seconds, or increased by at least 30 seconds, when compared to a textile composite constructed of substantially the same materials but without the heat stable spun yarn in which the melt absorption process described above does not occur, when tested according to the method for Horizontal Flame Test described herein. In other embodiments, the composite articles have a shrinkage, in at least one direction, of less than 20 percent in the thermal shrinkage test according to ASTM 2894-14. In still further embodiments, the composite articles have a shrinkage, in at least one direction, of less than 15 percent or less than 10 percent in the thermal shrinkage test according to ASTM 2894-14. In some embodiments, the composite articles have a shrinkage of 0.01 percent to 19 percent, or from 1 percent to 19 percent, or from 5 percent to 19 percent, or from 10 percent to 19 percent, or from 15 percent to 19 percent, or from 0.01 percent to 15 percent, or from 0.01 to 8 percent, or from 0.01 to 6 percent or from 0.01 to 1 percent.

In some embodiments, the adhesive layer, upon expansion, forms a plurality of tendrils comprising expanded graphite. The total surface area of the polymer resin-expandable graphite mixture increases significantly when compared to the same mixture prior to expansion. In one embodiment, the surface area of the mixture is increased at least five times after expansion. In another embodiment, the surface area of the mixture increases at least ten times after expansion. In addition, tendrils will often extend outward from the expanded mixture. In an embodiment where the polymer resin-expandable graphite mixture is situated on a substrate in a discontinuous form, the tendrils will extend to at least partially fill the open areas between the discontinuous domains. In a further embodiment, the tendrils will be elongated, having a length to width aspect ratio of at least 5 to 1.

The polymer resin-expandable graphite mixture may be produced by a method that provides an intimate blend of polymer resin and expandable graphite, without causing substantial expansion of the expandable graphite. Suitable mixing methods include but not limited to paddle mixing, blending and other low shear mixing techniques. In one method, the intimate blend of polymer resin and expandable graphite particles is achieved by mixing the expandable graphite with a monomer or prepolymer prior to polymerization of the polymer resin. In another method, the expandable graphite may be blended with a dissolved polymer, wherein the solvent is removed after mixing. In another method, expandable graphite is blended with a hot melt polymer at a temperature below the expansion temperature of the graphite and above the melting temperature of the polymer. In methods which provide an intimate blend of polymer resin and expandable graphite particles or agglomerates of expandable graphite, the expandable graphite is coated or encapsulated by the polymer resin prior to expansion of the graphite. In other embodiments, the intimate blend is achieved prior to applying the polymer resin-expandable graphite mixture to a substrate.

The polymer resin-expandable graphite mixture comprises less than or equal to 50 weight percent, or less than or equal to 40 weight percent, or less than or equal to 30 weight percent of the expandable graphite, based on the total weight of the polymer resin and the expandable graphite. In other embodiments, the expandable graphite comprises less than or equal to 20 weight percent, or less than or equal to 10 weight percent, or less than or equal to 5 weight percent, based on the total weight of the polymer resin and the expandable graphite. Generally, from 5 weight percent to 50 weight percent of expandable graphite, based on the total weight of the polymer resin and the expandable graphite, is desired. In some embodiments, the polymer resin-expandable graphite mixture comprises 10 to 49 weight percent of expandable graphite, or 20 to 49 weight percent of expandable graphite, or 30 to 50 weight percent of expandable graphite, or 40 to 49 weight percent of expandable graphite, or 5 to 40 weight percent of expandable graphite, or 5 to 30 weight percent of expandable graphite, or 5 to 20 weight percent of expandable graphite, or 5 to 10 weight percent of expandable graphite, or 10 to 30 weight percent of expandable graphite, or 30 to 40 weight percent of expandable graphite, or 10 to 25 weight percent of expandable graphite. In some embodiments, desirable flame resistance performance may be achieved with even lower amounts of expandable graphite. Loadings as low as 1 percent may be useful. Depending on the properties desired and the construction of the resulting textile composites, other levels of expandable graphite may also be suitable for other embodiments. Other additives such as pigments, fillers, antimicrobials, processing aids and stabilizers may also be added to the mixture.

In some embodiments, the adhesive may be applied to a surface (122) of the textile layer (120) comprising the heat stable spun yarn such as exemplified in FIG.1 and/or to the surface of an optional additional layer to form the adhesive layer (130) such as exemplified in FIG. 2. In some embodiments, the adhesive layer (130) may be applied as a continuous layer. However, in some embodiments where enhanced breathability and/or hand is desired, the adhesive layer (130) may be applied discontinuously to form a layer of adhesive material having less than 100 percent surface coverage. In some

embodiments, that adhesive layer (130) has from 0.01 to 99 percent surface coverage, or 1 to 99 percent surface coverage, or 10 to 99 percent surface coverage, or 25 to 99 percent surface coverage, or 50 to 99 percent surface coverage, or 75 to 99 percent surface coverage, or 95 to 99 percent surface coverage, or 0.01 to 90 percent surface coverage, or 0.01 to 70 percent surface coverage, or 0.01 to 40 percent surface coverage, or 0.01 to 20 percent surface coverage. A discontinuous application providing less than 100 percent surface coverage may take a variety of patterns including, but not limited to, dots, grids, lines or a combination thereof. In some embodiments with discontinuous coverage, the average distance between adjacent areas of the discontinuous pattern is less than 5 millimeters (mm), or preferably less than 3.5mm, 2.5mm, 1.5mm, or 0.5mm. In some embodiments, the average distance between adjacent areas of the discontinuous pattern is 0.0001 mm to 3.4 mm, or 0.001 to 3.4 mm, or 0.01 to 3.4 mm or 0.1 to 3.4 mm, or 1 to 3.4 mm or 1.5 to 3.4 mm, or 2.5 to 3.4 mm, or 0.0001 to 2.5 mm or 0.0001 to 1.5 mm or 0.0001 to 0.5 mm. The average distance between adjacent areas can be measured by measuring the edge-to-edge spacing between adjacent dots. In embodiments where properties such as hand, breathability, and/or textile weight are important, a surface coverage of less than 90 percent, or less than 80 percent, or less than 70 percent, or less than 60 percent, or less than 50 percent, or less than 40 percent, or less than 30 percent may be used. In some embodiments, the surface coverage is 0.1 to 89 percent, or 10 to 89 percent, or 30 to 89 percent, or 50 to 89 percent, or 70 to 89 percent, or 0.1 to 80 percent, or 0.1 to 60 percent, or 0.1 to 40 percent, or 0.1 to 20 percent. One method for achieving a coverage of less than 100 percent comprises applying the adhesive by printing the adhesive onto a surface of the textile layer comprising the heat stable spun yarn or to the optional additional layer by, for example, gravure printing. Figures 6A and 6B illustrate examples in which the adhesive layer (130) is provided in discontinuous patterns of dots (FIG. 6A) and grids (FIG. 6B) to a substrate (180) such as to one surface of the textile layer comprising the heat stable spun yarn. In some embodiments, the adhesive of the adhesive layer (130) may be applied at a rate to achieve an add-on weight of between 10 $g/m^2$ to 100 $g/m^2$ of the mixture. In some embodiments, the adhesive of the adhesive layer (130) is applied at a rate to achieve an add-on weight of less than 100 $g/m^2$, or less than 75 $g/m^2$, or less than 50 $g/m^2$, or less than 25 $g/m^2$. In some embodiments, the add-on weight is 0.1 to 99 $g/m^2$, or 0.1 to 75 $g/m^2$, or 0.1 to 50 $g/m^2$, or 0.1 to 25 $g/m^2$, or 1 to 99 $g/m^2$, or 10 to 99 $g/m^2$, or 35 to 99 $g/m^2$, or 60 to 99 $g/m^2$, or 80 to 99 $g/m^2$.

In one example of a discontinuous application, such as in the application of discrete dots (130) in Figure 6A, the polymer resin-expandable graphite mixture can be applied to the textile layer (120) comprising the heat stable spun yarn forming an adhesive layer (130) of heat reactive material in the form of a multiplicity of discrete dots. Optionally, an additional layer can then be placed upon the applied adhesive layer (130) and the resulting laminate can be run through the nip of a 2-roll roller to form the composite article (100) as a 2-layer laminate. Upon expansion, the discrete dots form a pattern of structures having structural integrity thereby providing sufficient protection to the composite article (100) to achieve the enhanced properties described herein. By structural integrity it is meant that the heat reactive material after expansion withstands flexing or bending without substantially disintegrating or flaking off the optional additional layer or the textile layer (120) comprising the heat stable spun yarn, and withstands compression upon thickness measurement when measured according to the Thickness Change Test described herein. In some embodiments, the composite article (100) of the present invention changes thickness upon heat exposure.

The thickness of the composite article after expansion is at least 0.5 mm greater, e.g., at least 0.8 mm greater, at least 1 mm greater, at least 1.5 mm greater, or at least 2 mm greater, than the thickness of the composite article prior to expansion. In other embodiments, the thickness of the composite article after exposure to flame and or heat is at least 20 percent greater than the thickness of the composite article before exposure to flame and/or heat.

In some embodiments, the adhesive layer (130) may be applied in a variety of patterns, for example, dots, lines, or grids. Other methods for applying the adhesive material may include screen printing, or spray or scatter coating or knife coating, provided the adhesive material may be applied in a manner in which the desired properties upon exposure to heat or flame are achieved.

In some embodiments, the composite articles (100) can optionally comprise one or more additional layers like an inner layer (140) and/or a facial layer (110), wherein the adhesive layer (130) is disposed between the textile layer (120) and at least one of the one or more additional layers, FIG 3. In some embodiments, the one or more additional layers can independently be a textile, a thermally stable textile, a waterproof breathable material, a thermally stable film or a combination thereof. In some embodiments, the one or more additional layers, if present, can be oriented on one or both sides of the textile layer (120) comprising the heat stable spun yarn, forming an inner layer (140) or a facial layer (110), with the adhesive layer (130) disposed at least between the textile layer (120) comprising the heat stable spun yarn and the additional layer. In some embodiments, additional adhesive layers may be present between each of the layers, wherein the additional adhesive layer or layers can independently be the same or different as the adhesive layer comprising the polymer resin and expandable graphite. In general, any of the polymer resins described as suitable for the adhesive layer (130) comprising the polymer resin and expandable graphite can be used as the additional adhesive layer. In some embodiments, if two or more additional layers are present in the composite article, one of the additional layers can be adhered to the textile layer comprising the heat stable spun yarn via the adhesive layer while the other layer may be adhered in any other way known in the art. For example, the layers may be stitched together, wherein the stitching is around the edges of one or more of the layers, the stitching is throughout the area of one or more of the layers or both. In some

embodiments, the composite article (100) consists of, or consists essentially of a textile layer (120) comprising the heat stable spun yarn, an adhesive layer (130), and an additional layer, wherein the adhesive layer (130) is disposed between the textile layer (120) comprising the heat stable spun yarn and the additional layer. In other embodiments, the disclosure also relates to a composite article (100) comprising a textile layer (120) comprising the heat stable spun yarn, an adhesive layer (130), a waterproof breathable layer, and an additional layer, wherein the adhesive layer (130) is disposed at least between the textile layer (120) and the waterproof breathable layer. In still further embodiments, the composite article (100) comprises, consists of, or consists essentially of a facial layer (110) oriented on one side (124) of the textile layer (120) comprising the heat stable spun yarn, an adhesive layer (130), and an inner layer (140) oriented on the other side (122) of the textile layer (120) from the facial layer (110), wherein the adhesive layer (130) is disposed between the textile layer (120) comprising a heat stable spun yarn and both the facial and inner layers (110, 140). Used in this context, consisting essentially of means that the composite article (100) contains those layers mentioned, attached or bonded to one another in the specified order, and no other additional layers that materially affect the composite article.

In some embodiments and as shown in FIG. 1, the composite article (100) comprises a textile layer (120) comprising the heat stable spun yarn, and an adhesive layer (130). The heat stable spun yarn comprises one or more staple fibers that do not shrink more than 5% in a 260°C oven test. At least one other yarn or filament that is different than the heat stable spun yarn is used within the textile layer (120). The adhesive layer (130) is bonded to at least one side (122) of the textile layer (120).

In another embodiment and as shown in FIG. 2, an additional layer in the form of an inner layer (140) is shown. In this embodiment, the composite article (100) comprises a textile layer (120) comprising the heat stable spun yarn, an adhesive layer (130) which is disposed between the textile layer (120) and the inner layer (140). The adhesive layer (130) is attached to one side (122) of the textile layer (120).

In the embodiment shown in FIG. 3, two additional layers are shown. The composite article (100) comprises a first additional layer, sometimes referred to as a facial layer (110) that is adjacent to the textile layer (120) comprising the heat stable spun yarn, an adhesive layer (130), for example, an adhesive comprising a heat reactive material, and a second additional layer, sometimes referred to as an inner layer (140). In some embodiments, the facial layer (110) and the textile layer (120) can be laminated together or bonded using an adhesive (114) that can be the same or different as the adhesive layer (130). In some embodiments, the adhesive layer (130) is disposed on an inner side (122) of the textile layer (120) comprising the heat stable spun yarn. In some embodiments, the heat stable spun yarn comprises one or more staple fibers that do not shrink more than 5% in a 260°C oven test. At least one other yarn or filament that is different than the heat stable spun yarn is used within the textile layer (120). In some embodiments, an outer surface (112) of facial layer (110) can be exposed and visual to the environment. The adhesive layer (130) does not penetrate through to or does not come into contact with the facial layer (110) so that an adhesive layer comprising heat reactive material is not visible and does not cause a color change or surface deformation on the outer surface (112) of the facial layer (110). In some embodiments, depending on the material of the facial layer (110), the outer surface (112) has a surface topology that provides the look and feel of a garment. To improve the aesthetic appearance of the composite article (100), the adhesive layer (130) comprising heat reactive material should not cause deformations to form an undesirable grid or darkening pattern on the outer surface (112) of the facial layer (110). A darkening pattern is a result of the typically darker color of the adhesive layer (130) comprising heat reactive material relative to the textile layer (120) comprising the heat stable spun yarn (120) and is not desirable. Specifically, the outer surface (112) of the facial layer (110) appears without deformations, e.g., without dimples or bumps from the adhesive layer (130) comprising heat reactive material.

In some embodiments, the one or more additional layers can be attached to the textile layer (120) comprising the heat stable spun yarn so that in the composite article (100), for example, a garment, the additional layer is a facial layer (110) oriented on the outside of the garment, that is, on the side that is opposite a wearer of the garment. The optional facial layer (110) (example shown in FIG. 3) can comprise a variety of materials that are attached to the textile layer (120) comprising the heat stable spun yarn. In some embodiments, the facial layer (110) can comprise a colored or printed, relatively lightweight material, for example, a textile, including a woven, a knit, and a non-woven. In other embodiments, the facial layer (110) can be a film, for example, a porous (breathable) film or a nonporous (non-breathable) film. As used herein, the term film means a continuous layer having a larger ratio between surface area and thickness, i.e. essentially two-dimensional. In some embodiments, the film can be provided as a coating on a substrate or it can be free-standing and handled as a separate object. In still further embodiments, the facial layer (110) comprises a breathable material. As used herein, the term breathable means that the material can have a moisture vapor transmission rate (MVTR) of greater than 1000 grams/meter$^2$/24 hours (g/m$^2$/24hr). In other embodiments, the MVTR, expressed as g/m$^2$/24hr, of the facial layer (110) can be greater than or equal to 5000 or greater than or equal to 10,000 or greater than or equal to 20,000. In some embodiments, the facial layer (110) can include, but is not limited to a polyamide, a nylon (e.g., 30 denier (D) nylon, 40 D nylon, or 70D nylon), a nylon twill (e.g., 30D nylon twill, 40D nylon twill, or 70D nylon twill), a polyester, a polypropylene, a polyethylene or multilayer laminates thereof. In some embodiments, the facial layer (110) can be waterproof and/or the facial layer can be coated with a layer of a durable water resistant (DWR) coating. In some embodiments, this DWR coating can be on the outer side (112) of the facial layer (110). In another embodiment, the facial layer is uncoated but comprises a

waterproof material.

In some embodiments, when used, the facial layer (110) can be attached to the textile layer (120) comprising the heat stable spun yarn using any of the known techniques, including, for example, lamination and/or adhesion. In some embodiments, the facial layer is attached to the textile layer comprising the heat stable spun yarn using an adhesive. Suitable adhesives can include any of those listed previously.

In some embodiments, the one or more additional layers can be attached to the textile layer (120) comprising the heat stable spun yarn so that in the composite article, for example, a garment, the additional layer can be an inner layer (140) oriented on the inside of the garment, that is, on the side that is closer to a wearer of the garment. In embodiments comprising an inner layer (140), as exemplified in FIG. 2 and 3, the adhesive layer (130) may be disposed on the textile layer (120) comprising the heat stable spun yarn or on the inner layer (140). In some embodiments, the adhesive layer (130) can be applied in a manner in which the adhesive layer (130) provides an adhesive bond between the inner layer (140) and the textile layer (120) comprising the heat stable spun yarn. In some embodiments, the inner layer (140) can be a textile, for example, a knit, a woven or a nonwoven material or a film. In some embodiments, the inner layer (140) can be attached to the textile layer (120) comprising the heat stable spun yarn by the adhesive layer (130) as illustrated in FIG. 2. In some embodiments, the inner layer (140) can comprise a thermally stable backer. Materials suitable for use as a thermally stable backer can include, for example, textiles which are not meltable according to the Melting and Thermal Stability Test as presented herein. Examples of a suitable heat stable textile backer include an aramid, a Flame Retardant (FR) cotton, a PBI, a PBO, a FR rayon, a modacrylic blend, a polyamine, a carbon, a fiberglass, a PAN and blends and combinations thereof.

In other embodiments, the one or more additional layers can independently comprise, for example, a film, a knit, a woven, a non-woven or a combination thereof. In still further embodiments, the inner layer (140) can comprise breathable or non-breathable thermally stable convective barrier material(s) to further enhance the performance of the composite (100) upon exposure to flame or heat. In some embodiments, the one or more additional layers can be a thermally stable convective barrier material that can be a film, for example, a polyimide, a silicone, or a polytetrafluoroethylene (PTFE), such as unexpanded PTFE or expanded PTFE (ePTFE). The thermally stable convective barrier prevents the convective heat transfer to the layers or substrates behind it when exposed to a convective heat source. In some embodiments, convective barriers for use in embodiments described herein have a maximum air permeability of less than 10 Frazier after thermal exposure when tested as per the method described herein. In some embodiments, a convective barrier has an air permeability after thermal exposure of less than 5 Frazier. In some embodiments, a convective barrier has an air permeability after thermal exposure of less than 3 Frazier. In some embodiments, the convective barrier has an air permeability after thermal exposure of 0.1 to 9.5 Frazier, or 0.1 to 5 Frazier, or 0.1 to 2 Frazier, or 1 to 4.5 Frazier, or 1 to 7 Frazier.

In further embodiments, as exemplified in FIG. 4, the composite article (100) comprises a textile layer (120) comprising the heat stable spun yarn, and an adhesive layer (130) which is disposed between the textile layer (120) and the inner layer. In some embodiments, the inner layer may comprise a multilayer thermally stable barrier (142). In some embodiments, the thermally stable barrier (142) may comprise two or more layers of a thermally stable film (144 and 146) and, for example a polymer layer (148) there between. In some embodiments, the polymer layer (148) may be waterproof, breathable, air impermeable or a combination thereof.

In a further embodiment, such as the one illustrated in FIG. 5, the composite article (100) comprises a textile layer (120) comprising the heat stable spun yarn, and an adhesive layer (130). At least one other yarn or filament that is different than the heat stable spun yarn is used within the textile layer (120). In some embodiments, the composite article (100) may further comprise an inner layer (150) as a textile backer positioned on a side of a thermally stable barrier (144) that is opposite the adhesive layer (130). In some embodiments, the textile backer can be attached with an additional adhesive layer (152) in the form of discrete dots. In some embodiments, the textile backer is a thermally stable textile backer, such as a material which passes the melting and thermal stability test described herein.

Further embodiments relate to a method for producing the composite article comprising providing a textile layer comprising the heat stable spun yarn having a first surface and a second surface, providing an adhesive, applying a layer of the adhesive to at least one surface of the textile layer comprising the heat stable spun yarn. The method can further comprise the step of providing at least one additional layer, and attaching the at least one additional layer to the adhesive layer. The step of applying the at least one additional layer to the adhesive layer can be done just after the application of the layer of adhesive, in the case of a crosslinkable adhesive. Typically, in embodiments using a crosslinkable adhesive, a continuous method occurs wherein the layer of the adhesive is applied to the textile layer comprising the heat stable spun yarn and the at least one additional layer is applied to the layer of adhesive within, for example, less than 1 second to 1 minute. In some embodiments, if the adhesive is a thermoplastic adhesive, the at least one additional layer can be applied immediately after the application of the layer of adhesive, or days or even weeks after the application of the layer of adhesive. In some embodiments, the at least one additional layer can be adhered to the adhesive layer via pressure, for example, passing the two layer composite article through the nip of two rollers. In some embodiments, any second or subsequent additional layer can be applied to the textile layer or the first additional layer via any of the methods described

above. In some embodiments, the second or subsequent additional layer can be applied in the same manner as the application of the first additional layer, for example, during the application process of applying the first additional layer or any time period following the application of the first additional layer. In some embodiments, the method can further include the step of applying a durable water resistant (DWR) coating to the textile layer comprising the heat stable spun yarn. In some embodiments, an inner layer can be attached to the adhesive layer to form the product. As used herein, the term "attaching" means bonding, adhesively securing or otherwise laminating one surface to another. Lamination techniques and the use of lamination adhesives are known in the art.

**In** some embodiments, the textile layer comprising the heat stable spun yarn may also be flammable or nonflammable. Materials are tested with the Vertical Flame test to determine whether they are flammable or nonflammable.

A method is also provided for reducing the predicted percent body bum after exposure to flame when tested according to the ASTM F1930 Garment Flammability Test (thermal manikin) described herein. In some embodiments, the method comprises providing the composite article comprising the textile layer comprising the heat stable spun yarn and at least one additional layer, having an adhesive layer between the textile layer comprising a heat stable spun yarn and the optional at least one additional layer; subjecting the composite article to ASTMF1930, wherein the textile layer is oriented toward the heat source; testing a comparable composite article wherein the textile article does not contain the heat stable spun yarn; and calculating the percent difference. As used herein, a "comparable composite fabric" means a composite article formed from a textile comprising essentially the same fibers, but not including the heat stable spun yarn. For example, if the textile layer comprising the heat stable spun yarn is a polyester fabric wherein every 5$^{th}$ pick and every 5$^{th}$ end is the heat stable spun yarn, then the comparable composite fabric would be a polyester fabric. In some embodiments, the method further comprises constructing a garment from the composite wherein the textile layer comprising a heat stable spun yarn is oriented away from the body of the wearer and toward the source of the flame. In some embodiments, the reduction in body bum as compared to the comparable composite article can be up to 10 percent less, or up to 15 percent less, or up to 20 percent less, or up to 25 percent less.

**In** one embodiment, the composite article as described herein is suitable for use in garments for workers in hazardous environments. The garments can be shrink resistant, breathable, waterproof, and/or flame retardant, while being lightweight, flexible, comfortable to wear, with good colorfastness, printing, and abrasion resistance. In embodiments, the composite article can have a thickness of less than 0.5 mm, e.g. less than 0.48 mm, less than 0.40 mm, less than 0.35 mm, less than 0.25 mm, less than 0.21 mm, or less than 0.2 mm. In some embodiments, the composite article has a thickness of 0.1 to 0.49 mm, or 0.1 to 0.35 mm, or 0.1 to 0.25 mm, or 0.1 to 0.21 mm, or 0.1 to 0.47 mm, or 0.2 to 0.47 mm, or 0.3 to 0.47 mm. In embodiments, the composite article can have an average weight of less than 275 g/m$^2$, e.g., less than 255 g/m$^2$, less than 240 g/m$^2$, less than 220 g/m$^2$, less than 200 g/m$^2$, less than 190 g/m$^2$, less than 185 g/m$^2$, less than 171 g/m$^2$, or less than 160 g/m$^2$. In some embodiments, the composite article has an average weight of 5 to 274 g/m$^2$, or 10 to 274 g/m$^2$, or 50 to 274 g/m$^2$, or 100 to 274 g/m$^2$, or 150 to 274 g/m$^2$, or 250 to 274 g/m$^2$, or 5 to 260 g/m$^2$, or 5 to 220 g/m$^2$, or 5 to 175 g/m$^2$, or 5 to 125 g/m$^2$, or 5 to 50 g/m$^2$, or 5 to 10 g/m$^2$.

Typically, lightweight fabrics are relatively easy to tear. In some embodiments, composite articles of the present disclosure can improve the Elmendorf tear strength by at least 10% when compared to the same fabric made without the heat stable spun yarn. In other embodiments, the composite articles can have an Elmendorf tear strength of greater than 15%, or greater than 20%, or greater than 30% when compared to a comparable fabric produced without the disclosed heat stable spun yarn.

In one embodiment, when tested according to the Thermal Protective Performance ASTM F2703-08 test method provided herein, the composite article (100) has a thermal protective performance of 20 or higher. In another embodiment, upon exposure of the outer surface (112) of the textile layer comprising a heat stable spun yarn to a flame, the composite article (100) has a Burned Area of less than 5 cm$^2$ after a 3 second exposure when tested according to the JIS Flammability test (JIS L1091 A-1 Method). In another embodiment, upon exposure of the outer surface (112) of the textile layer comprising a heat stable spun yarn to a flame, the composite article (100) has a Burned Area of less than 50 cm$^2$ after a 60 second exposure when tested according to the JIS Flammability test (JIS L1091 A-1 Method).

In some embodiments, composite articles made according to the methods described herein preferably have a moisture vapor transmission rate (MVTR) greater than 1000 grams/square meter/24 hours (g/m$^2$/24hr), or greater than 3000 g/m$^2$/24hr, or greater than 5000 g/m$^2$/24hr, or greater than 7000 g/m$^2$/24hr, or greater than 9000 g/m$^2$/24hr, or greater than 10,000 g/m$^2$/24hr, or higher. In some embodiments, the composite articles have a break open time greater than 50 seconds, greater than 60 seconds, or even greater than 120 seconds when tested according to the methods for Horizontal Flame Test described herein. In some embodiments, the composite articles are also flame retardant and can have an after flame less than 20 seconds when tested according to the Horizontal Flame Test and Self-Extinguishing Test methods described herein. In further embodiments, composite articles have an afterflame less than 15 seconds, or less than 10 seconds, or less than 5 seconds. In some embodiments, the composite articles have an after flame of 0.01 to 14 seconds, or 0.01 to 10 seconds, or 0.01 to 7 seconds, or 0.01 to 3 seconds, or 1 to 14 seconds, or 5 to 14 seconds, or 10 to 14 seconds. In some embodiments, the composite articles exhibit substantially no melt dripping behavior when tested in the

Horizontal Flame test. In another embodiment, a composite article is formed according to the methods described herein, can have a hand less than 300, or less than 250, or less than 200, or from 1 to 299, or from 50 to 299, or from 75 to 299, or from 150 to 299, or from 200 to 299, and have an after-flame of less than 20 seconds, or less than 15 seconds or less than 10 seconds, or an after-flame of zero, when measured according to the tests described herein for Flexibility and Hand, and Horizontal Flame Test and Self-Extinguishing Test.

In some embodiments, composite articles of the present disclosure can also provide lower char lengths when compared to a similar composite article made without the heat stable spun yarns. In some embodiments, the char length can be improved by greater than or equal to 20%, or greater than or equal to 30%, or greater than or equal to 40%, or greater than or equal to 50%, or greater than or equal to 60%, or greater than or equal to 70%, or greater than or equal to 80%, or greater than or equal to 90%. In some embodiments, the char length can be improved by 20% to 100%, or 50% to 100%, or 75% to 100%, or 90% to 100%, or 20% to 85%, or 20% to 70%, or 20% to 60%, or 20% to 40%, or 20% to 30%. Char length can be measured according to ASTM D6413.

Without intending to limit the scope of the present invention, the following examples illustrate how the present invention may be made and used.

## Test Methods

### THERMAL SHRINK TEST

The Thermal Shrink Test or Thermal Dimensional Change Test is used to determine the shrinkage of an article, for example, the laminate, and is measured according to ASTM F2894-14. The data reported is the average shrinkage based on three replications.

### HORIZONTAL FLAME TEST

This test is modeled generally after MIL-C 83429B. A 75 mm by 250 mm textile composite sample (3 inch by 10 inch) is clamped in a steel fixture (400 mm long by 75 mm wide with a center window of 350 mm long and 50 mm wide) using binder clips. The sample is clamped in a manner that secures the edges of the textile composite without obstructing the area of textile composite present in the window of the steel clamping fixture. The sample in fixture is placed horizontally at a height of 40mm in a 90mm flame (based on butane at 2 psi or 0.138 bar using a Meeker burner). The sample is exposed to the flame and the time is recorded until the convective barrier breaks open (or a hole forms in the face textile in case where convective barrier is not used), either by cracking or the formation of a hole, and light from the flame is evident when viewing through the crack or opening in the material. The sample is subsequently removed from the flame. The time recorded is referred to as the horizontal flame break open time. The sample is observed for melt dripping or falling droplets.

### SELF-EXTINGUISHING TEST

After the material sample is removed from the flame in the Horizontal Flame Test, above, the material is observed for any afterflame and afterflame time is recorded. If the sample exhibits any melt dripping or falling droplets, it is also recorded. If no afterflame is observed, or if an afterflame is observed upon removal but extinguishes within five (5) seconds after removal from the flame, the material is said to be self-extinguishing.

### VERTICAL FLAME TEST

Testing is in accordance with the ASTM D6413 test standard. Samples are exposed to flame for 12-seconds. Afterflame time is averaged for 3 samples. Textiles with afterflame of greater than 2 seconds are considered as flammable.

### FLAMMABILITY TEST

The flammability of samples is measured according to the JIS-1091 A1 Method. A 350 mm x 250 mm sheet of the composite article sample is mounted to a combustion test box heated by a burner with flame length 45 mm for 1 minute. Afterflame time, afterglow time and burned area are measured. The test is repeated with two additional samples so that the flame is removed 3 seconds and 60 seconds after flamed.

### MELTING AND THERMAL STABILITY TEST

The test is used to determine the thermal stability of textile materials. This test is based on the thermal stability test as described in section 8.3 of NFPA 1975, 2004 Edition. The test oven is a hot air circulating oven as specified in ISO 17493.

The test is conducted according to ASTM D 751, *Standard Test Methods for Coated Fabrics,* using the Procedures for Blocking Resistance at Elevated Temperatures (Sections 89 to 93), with the following modifications:

◦ Borosilicate glass plates measuring 100 mm x 100 mm x 3 mm (4 in. x 4 in. x ⅛ in.) are used.
◦ A test temperature of 265°C, +3/-0°C (510°F, +5/-0°F) is used.

The specimens are allowed to cool a minimum of 1 hour after removal of the glass plates from the oven.
Any sample side sticking to the glass plate, sticking to itself when unfolded, or showing evidence of melting or dripping is considered as meltable. Any sample side lacking evidence of meltable side is considered as thermally stable.

## Moisture Vapor Transmission Rate (MVTR)

A description of the test employed to measure moisture vapor transmission rate (MVTR) is given below. The procedure has been found to be suitable for testing films, coatings, and coated products.
In the procedure, approximately 70 ml of a solution consisting of 35 parts by weight of potassium acetate and 15 parts by weight of distilled water are placed into a 133 ml polypropylene cup, having an inside diameter of 6.5 cm at its mouth. An expanded polytetrafluoroethylene (PTFE) membrane having a minimum MVTR of approximately 85,000 $g/m^2/24$ hr as tested by the method described in U.S. Patent 4,862,730 (to Crosby), is heat sealed to the lip of the cup to create a taut, leakproof, microporous barrier containing the solution.
A similar expanded PTFE membrane is mounted to the surface of a water bath. The water bath assembly is controlled at 23°C plus 0.2°C, utilizing a temperature controlled room and a water circulating bath.
The sample to be tested is allowed to condition at a temperature of 23°C and a relative humidity of 50 percent prior to performing the test procedure. Samples are placed so that the microporous polymeric membrane is in contact with the expanded polytetrafluoroethylene membrane mounted to the surface of the water bath and allowed to equilibrate for at least 15 minutes prior to the introduction of the cup assembly.
The cup assembly is weighed to the nearest 1/1000g and placed in an inverted manner onto the center of the test sample.
Water transport is provided by the driving force between the water in the water bath and the saturated salt solution providing water flux by diffusion in that direction. The sample is tested for 15 minutes and the cup assembly is then removed, weighed again within 1/1000g.
The MVTR of the sample is calculated from the weight gain of the cup assembly and is expressed in grams of water per square meter of sample surface area per 24 hours.

## Expansion test

TMA (Thermo-mechanical analysis) is used to measure the expansion of expandable graphite particles. Expansion is tested with TA Instruments TMA 2940 instrument. A ceramic (alumina) TGA pan, measuring roughly 8mm in diameter and 12mm in height is used for holding the sample. Using the macroexpansion probe, with a diameter of roughly 6mm, the bottom of the pan is set as zero. Then flakes of expandable graphite 0.1-0.3mm deep, as measured by the TMA probe, are put in the pan. The furnace is closed and initial sample height is measured. The furnace is heated from 25°C to 600°C at a ramp rate of 10°C/min. The TMA probe displacement is plotted against temperature; the displacement is used as a measure of expansion.

## Elmendorf Tear Strength

The Elmendorf Tear strength test was performed according to ASTM 1424. The data reported is the average of 3 tests in both the warp and fill directions and the units are provided in kilograms.

## Puncture, Propagation Tear Resistance test

The puncture, propagation tear resistance test was performed according to ASTM D-2582. The data reported is the average of 3 replicates in the warp direction only and the units are provided in kilograms.

## Yarn Shrink test

Three lengths of yarn, each 25.4 centimeter (cm), were cut and placed in a rectangular pan lined with PTFE film to minimize sticking. The pan was large enough so that the yarns could be laid flat without touching the edges of the pan. The pan was placed in an oven set to a temperature of 260°C for 5 minutes, then removed from the oven. Once the samples had

cooled, the length of each sample was measured. The percent shrinkage was determined according to the formula;

$$\% \text{ shrinkage} = [(\text{initial length} - \text{length after oven})/\text{initial length}]*100$$

The percent shrinkage is the average of the three test results.

Preparation of Yarn #1 (93/5/2 NOMEX®/KEVLAR®/P140 spun yarn).

This was a commercial yarn obtained from Springfield LLC (Milliken) where NOMEX® aramid, KEVLAR® aramid and P140 antistat yarn was blended, carded, drawn and air jet spun. Size of the yarn is 38/1 NeC (140 denier or 155 dtex).

Preparation of Yarn #2 (78/20/2 KERMEL® from Kermal SAS, Alsace, France/TW ARON®/P140 spun yarn from Teijin Aramid, Conyers, GA)

KERMEL® (Marine blue solution dyed), black TWARON® and P140 antistatic staple fibers were obtained from Kermel Inc. and were blended in the ratio above, carded, made into roving drawn and ring spun in a ring spinning frame. Size of the final yarn was 35/1 NeC (152 denier or 169 dtex).

Individual samples of Yarn #1 and Yarn #2 having a length of about 25.4 centimeters (cm) were placed in an oven that was set to a temperature of 260°C and left in the oven for 5 minutes. After removal from the oven, Yarn #1 showed a shrinkage in the range of 4.5-5.0%. The samples of yarn #2, on the other hand showed shrinkage of less than 1%.

**Preparation of adhesive #1**

A flame retardant polyurethane resin was prepared by first forming a resin according to commonly owned US Patent 4,532,316 and adding in to the reactor a phosphorus-based flame retardant material, in an amount of about 20% by weight. After the polyurethane resin was formed, 70 grams of the polyurethane resin was mixed with 18 grams of expandable graphite having an expansion of greater than 900 micrometers and an additional 18 grams of another phosphorus-based flame retardant material at 80°C in a stirring vessel. The polymer resin was heated to 80°C and the expandable graphite was added, followed with low shear hand mixing until a uniform dispersion was formed. The mixture was cooled and used as is.

Comparative Fabric A

Comparative fabric A was a plain weave fabric (available from Milliken & Company, Spartanburg, South Carolina, USA). The fabric has 70/34 polyester multifilament texturized yarn (39.4 yarns/cm) in both directions. The fabric had a weight of about 75 grams/meter$^2$ (2.2 oz/yd$^2$).

Preparation of Comparative Laminate A

Comparative Fabric A was laminated to a GORE TEX® porous ePTFE membrane (part# 18050C) available from W.L. Gore and Associates, Elkton, Maryland, USA using Adhesive #1. The adhesive #1 was gravure printed to provide about 57% fabric coverage onto the fabric surface. The porous ePTFE membrane was placed on top of the adhesive and rolled through the nip of two rollers. The laminate was placed on a roll to cure. The laminate had a weight of about 170 grams/meter$^2$ (5.0 oz/yd$^2$).

Preparation of Fabric #1:

Fabric #1 was produced as a plain weave using 70/34 texturized polyester filament (Milliken and Co.) with Yarn #1 inserted at every 10th ends and picks. The fabric produced with about 41.3 yarns/cm in the warp direction and 40.2 yarns/cm in the fill direction (105 yarns/inch X 102 yarns/inch). The fabric had a weight of 88 grams/meter$^2$ (2.6 oz/yd$^2$).

Preparation of Laminate #1

Fabric #1 was laminated to a GORE TEX® porous ePTFE membrane (part# 18050C) available from W.L. Gore and Associates, Elkton, Maryland, USA using Adhesive #1. The adhesive #1 was gravure printed to provide about 57% fabric coverage onto the fabric surface. The porous ePTFE membrane was placed on top of the adhesive and rolled through the nip of two rollers. The laminate was placed on a roll to cure. The laminate had a weight of about 156 grams/meter$^2$ (4.6 oz/yd$^2$).

Preparation of Fabric #2:

Fabric #2 was produced as a plain weave using 70/34 texturized polyester filament (Milliken and Co.) with Yarn #1 inserted at every 5th ends and picks. The fabric produced with about 39.4 yarns/cm in the warp direction and 38.6 yarns/cm in the fill direction (100 yarns/inch X 98 yarns/inch). The fabric had a weight of 81 grams/meter$^2$ (2.4 oz/yd$^2$).

Preparation of Laminate #2

Fabric #2 was laminated to a GORE TEX® porous ePTFE membrane (part# 18050C) available from W.L. Gore and Associates, Elkton, Maryland, USA using Adhesive #1. The adhesive #1 was gravure printed to provide about 57% fabric coverage onto the fabric surface. The porous ePTFE membrane was placed on top of the adhesive and rolled through the nip of two rollers. The laminate was placed on a roll to cure. The laminate had a weight of about 174 grams/meter$^2$ (5.14 oz/yd$^2$).

Preparation of Fabric #3:

Fabric #3 was produced as a plain weave using 70/34 texturized polyester filament (Milliken and Co.) with Yarn #2 inserted at every 10$^{th}$ ends and picks. The fabric produced with about 41.3 yarns/cm in the warp direction and 40.2 yarns/cm in the fill direction (105 yarns/inch X 102 yarns/inch). The fabric had a weight of 90 grams/meter$^2$ (2.65 oz/yd$^2$).

Preparation of Laminate #3

Fabric #3 was laminated to a GORE TEX® porous ePTFE membrane (part# 18050C) available from W.L. Gore and Associates, Elkton, Maryland, USA using Adhesive #1. The adhesive #1 was gravure printed to provide about 57% fabric coverage onto the fabric surface. The porous ePTFE membrane was placed on top of the adhesive and rolled through the nip of two rollers. The laminate was placed on a roll to cure. The laminate had a weight of about 187 grams/meter$^2$ (5.51 oz/yd$^2$).

Preparation of Fabric #4

Fabric #4 was produced as a plain weave using 70/34 texturized polyester filament (Milliken and Co.) with Yarn #2 inserted at every 5$^{th}$ ends and picks. The fabric produced with about 39.4 yarns/cm in the warp direction and 38.6 yarns/cm in the fill direction (100 yarns/inch X 98 yarns/inch). The fabric had a weight of 92 grams/meter$^2$ (2.7 oz/yd$^2$).

Preparation of Laminate #4

Fabric #4 was laminated to a GORE TEX® porous ePTFE membrane (part# 18050C) available from W.L. Gore and Associates, Elkton, Maryland, USA using Adhesive #1. The adhesive #1 was gravure printed to provide about 57% fabric coverage onto the fabric surface. The porous ePTFE membrane was placed on top of the adhesive and rolled through the nip of two rollers. The laminate was placed on a roll to cure. The laminate had a weight of about 187 grams/meter$^2$ (5.52 oz/yd$^2$).

Laminate samples 1-4 and Comparative laminate A were tested according to the Thermal Dimensional Change Test, ASTM F2894-14. The data reported is the average shrinkage based on three replications.

TABLE 1

| Example | 260°C shrinkage % (warp) | 260°C shrinkage % (fill) |
|---|---|---|
| Comparative laminate A | 24.5 | 21 |
| Laminate #1 | 22 | 20.5 |
| Laminate #2 | 18.5 | 17.5 |
| Laminate #3 | 18.5 | 18 |
| Laminate #4 | 12.5 | 14 |

## Claims

1. A composite article (100) comprising;

   a) a textile layer (120) comprising:

      (i) a heat stable spun yarn comprising one or more heat stable staple fibers,

         wherein the heat stable spun yarn comprises a heat stable, non-meltable fiber, and wherein the heat stable spun yarn does not shrink more than 5% in an oven test at 260°C for 5 minutes, the oven test being in accordance with the yarn shrink test described in the description, and

      (ii) at least one other yarn or filament that is different than the heat stable spun yarn,

         wherein the at least one other yarn or filament is a meltable yarn or filament, wherein the textile layer comprises in a range of from 10 percent to 30 percent by weight of the heat stable spun yarns, the percent by weight based on a total weight of the textile layer, and

   b) an adhesive layer (130) bonded to the textile layer; wherein the adhesive layer comprises a polymer resin and an expandable graphite, wherein the expandable graphite expands at least 900 μm upon heating to 280°C when measured in accordance with the expansion test described in the description; and

   wherein the article has a shrinkage, in at least one direction, of less than 21 percent in the thermal shrinkage test according to ASTM 2894-14.

2. The composite article of claim 1, wherein the heat stable, non-meltable fiber is a cotton, a flame retardant cotton, a rayon, a flame retardant rayon, a flame retardant viscose, a modacryl, an aramid such as a p-aramid or a m-aramid, a polyamide-imide, a polybenzimidazole, a polybenzoxazole, a polyphenylene sulfide, a polyethylene imide, a wool, a carbon or a combination thereof.

3. The composite article of claim 1 or claim 2, wherein the textile layer (120) is a woven or a knit textile.

4. The composite article of any one of claims 1 to 3, further comprising one or more additional layers (110, 140), wherein the additional layer comprises a thermally stable textile (150), a waterproof breathable material (148), a thermally stable film (144, 146), or a combination thereof.

5. The composite article of claim 4, wherein the one or more additional layer comprises expanded polytetrafluoroethylene.

6. The composite article of any one of claims 1 to 5, wherein the meltable yarn or filament is a thermoplastic, a polyamide, a nylon, a nylon 6, a nylon 6,6, a polyester, a polyethylene terephthalate, a polytrimethylene terephthalate, a polyurethane, a polyolefin, a polyethylene, a polypropylene, an acrylic or a combination thereof.

7. The composite article of any one of claims 1 to 6, wherein the meltable yarn is a polyamide or a polyester yarn.

8. The composite article of any one of claims 1 to 7, wherein the heat stable spun yarn comprises from 10 percent to 20 percent by weight of the textile layer, based on the total weight of the textile layer.

9. The composite article of any one of claims 1 to 8, wherein a combination of the textile layer and the adhesive layer forms a char when the composite article is exposed to a temperature above 300°C.

10. The composite article of any one of claims 1 to 9, wherein the composite article is a garment, and wherein the textile layer is oriented away from the body of the wearer.

11. The composite article of any one of claims 1 to 10, wherein the heat stable spun yarn is a core spun yarn.

12. The composite article of any one of claims 1 to 11, wherein the heat stable spun yarn provides antistatic properties.

**Patentansprüche**

1. Verbundartikel (100), umfassend;

    a) eine Textilschicht (120), umfassend:

        (i) ein hitzestabiles gesponnenes Garn, umfassend eine oder mehrere hitzestabile Stapelfasern,

            wobei das hitzestabile gesponnene Garn eine hitzestabile, nicht schmelzbare Faser umfasst und wobei das hitzestabile gesponnene Garn in einem Ofentest bei 260 °C für 5 Minuten nicht mehr als 5 % schrumpft, wobei der Ofentest dem in der Beschreibung beschriebenen Garnschrumpfungstest entspricht, und

        (ii) mindestens ein anderes Garn oder Filament, das sich von dem hitzestabilen gesponnenen Garn unterscheidet,

            wobei das mindestens eine andere Garn oder Filament ein schmelzbares Garn oder Filament ist, wobei die Textilschicht in einem Bereich von 10 Prozent bis 30 Prozent nach Gewicht der hitzestabilen gesponnene Garne umfasst, wobei die Prozent nach Gewicht auf dem Gesamtgewicht der Textilschicht basieren, und

    b) eine Klebeschicht (130), die an die Textilschicht gebondet ist;

        wobei die Klebeschicht ein Polymerharz und einen expandierbaren Graphit umfasst,
        wobei der expandierbare Graphit beim Erhitzen auf 280 °C mindestens 900 μm expandiert, wenn entsprechend dem in der Beschreibung beschriebenen Expansionstest gemessen; und
        wobei der Artikel eine Schrumpfung, in mindestens einer Richtung, von weniger als 21 Prozent in dem thermischen Schrumpfungstest gemäß ASTM 2894-14 aufweist.

2. Verbundartikel nach Anspruch 1, wobei die hitzestabile, nicht schmelzbare Faser eine Baumwolle, eine flammverzögernde Baumwolle, ein Rayon, ein flammverzögerndes Rayon, eine flammverzögernde Viskose, ein Modacryl, ein Aramid wie z. B. ein p-Aramid oder ein m-Aramid, ein Polyamidimid, ein Polybenzimidazol, ein Polybenzoxazol, ein Polyphenylensulfid, ein Polyethylenimid, eine Wolle, ein Kohlenstoff oder eine Kombination davon ist.

3. Verbundartikel nach Anspruch 1 oder Anspruch 2, wobei die Textilschicht (120) ein gewebtes oder ein gestricktes Textil ist.

4. Verbundartikel nach einem der Ansprüche 1 bis 3, ferner umfassend eine oder mehrere zusätzliche Schichten (110, 140), wobei die zusätzliche Schicht ein thermisch stabiles Textil (150), ein wasserdichtes atmungsaktives Material (148), eine thermisch stabile Folie (144, 146) oder eine Kombination davon umfasst.

5. Verbundartikel nach Anspruch 4, wobei die eine oder mehrere zusätzliche Schicht(en) expandiertes Polytetrafluorethylen umfasst/umfassen.

6. Verbundartikel nach einem der Ansprüche 1 bis 5, wobei das schmelzbare Garn oder Filament ein Thermoplast, ein Polyamid, ein Nylon, ein Nylon 6, ein Nylon 6,6, ein Polyester, ein Polyethylenterephthalat, ein Polytrimethylenterephthalat, ein Polyurethan, ein Polyolefin, ein Polyethylen, ein Polypropylen, ein Acryl oder eine Kombination davon ist.

7. Verbundartikel nach einem der Ansprüche 1 bis 6, wobei das schmelzbare Garn ein Polyamid- oder ein Polyestergarn ist.

8. Verbundartikel nach einem der Ansprüche 1 bis 7, wobei das hitzestabile gesponnene Garn von 10 % bis 20 % nach Gewicht der Textilschicht, basierend auf dem Gesamtgewicht der Textilschicht, umfasst.

9. Verbundartikel nach einem der Ansprüche 1 bis 8, wobei eine Kombination aus der Textilschicht und der Klebstoffschicht eine Verkohlung bildet, wenn der Verbundartikel einer Temperatur oberhalb von 300 °C ausgesetzt wird.

**10.** Verbundartikel nach einem der Ansprüche 1 bis 9, wobei der Verbundartikel ein Kleidungsstück ist und wobei die Textilschicht von dem Körper des Trägers weg orientiert ist.

**11.** Verbundartikel nach einem der Ansprüche 1 bis 10, wobei das hitzestabile gesponnene Garn ein kerngesponnenes Garn ist.

**12.** Verbundartikel nach einem der Ansprüche 1 bis 11, wobei das hitzestabile gesponnene Garn antistatische Eigenschaften bereitstellt.

**Revendications**

**1.** Article composite (100) comprenant ;

a) une couche textile (120) comprenant :

(i) un filé thermostable comprenant une ou plusieurs fibres discontinues thermostables,

dans lequel le filé thermostable comprend une fibre thermostable non fusible, et
dans lequel le filé thermostable ne rétrécit pas de plus de 5 % lors d'un essai au four à 260 °C pendant 5 minutes, l'essai au four étant conforme à l'essai de rétrécissement de fil décrit dans la description, et

(ii) au moins un autre fil ou filament qui est différent du filé thermostable,

dans lequel l'au moins un autre fil ou filament est un fil ou filament fusible,
dans lequel la couche textile comprend dans une plage de 10 pour cent à 30 pour cent en poids des filés thermostables, le pourcentage en poids étant basé sur un poids total de la couche textile, et

b) une couche adhésive (130) liée à la couche textile ;

dans lequel la couche adhésive comprend une résine polymère et un graphite expansible,
dans lequel le graphite expansible se dilate d'au moins 900 μm lorsqu'il est chauffé à 280 °C lorsqu'il est mesuré conformément à l'essai de dilatation décrit dans la description ; et
ledit article présentant un retrait, dans au moins une direction, inférieur à 21 pour cent lors de l'essai de retrait thermique selon la norme ASTM 2894-14.

**2.** Article composite de la revendication 1, dans lequel la fibre thermostable et non fusible est un coton, un coton ignifuge, une rayonne, une rayonne ignifuge, une viscose ignifuge, un modacryle, un aramide tel qu'un p-aramide ou un m-aramide, un polyamide-imide, un polybenzimidazole, un polybenzoxazole, un sulfure de polyphénylène, un polyéthylène imide, une laine, un carbone ou une combinaison de ceux-ci.

**3.** Article composite de la revendication 1 ou la revendication 2, dans lequel la couche textile (120) est un textile tissé ou tricoté.

**4.** Article composite de l'une quelconque des revendications 1 à 3, comprenant en outre une ou plusieurs couches supplémentaires (110, 140), dans lequel la couche supplémentaire comprend un textile thermiquement stable (150), un matériau imperméable et respirant (148), un film thermiquement stable (144, 146) ou une combinaison de ceux-ci.

**5.** Article composite de la revendication 4, dans lequel la ou les couches supplémentaires comprennent du polytétrafluoroéthylène expansé.

**6.** Article composite de l'une quelconque des revendications 1 à 5, dans lequel le fil ou filament fusible est un thermoplastique, un polyamide, un nylon, un nylon 6, un nylon 6,6, un polyester, un polyéthylène téréphtalate, un polytriméthylène téréphtalate, un polyuréthane, une polyoléfine, un polyéthylène, un polypropylène, un acrylique ou une combinaison de ceux-ci.

**7.** Article composite de l'une quelconque des revendications 1 à 6, dans lequel le fil fusible est un fil de polyamide ou de polyester.

8. Article composite de l'une quelconque des revendications 1 à 7, dans lequel le filé thermostable comprend de 10 pour cent à 20 pour cent en poids de la couche textile, sur la base du poids total de la couche textile.

9. Article composite de l'une quelconque des revendications 1 à 8, dans lequel une combinaison de la couche textile et de la couche adhésive forme un résidu carboné lorsque l'article composite est exposé à une température supérieure à 300 °C.

10. Article composite de l'une quelconque des revendications 1 à 9, ledit article composite étant un vêtement, et ladite couche textile étant orientée à l'opposé du corps de l'utilisateur.

11. Article composite de l'une quelconque des revendications 1 à 10, dans lequel le filé thermostable est un filé à âme.

12. Article composite de l'une quelconque des revendications 1 à 11, dans lequel le filé thermostable fournit des propriétés antistatiques.

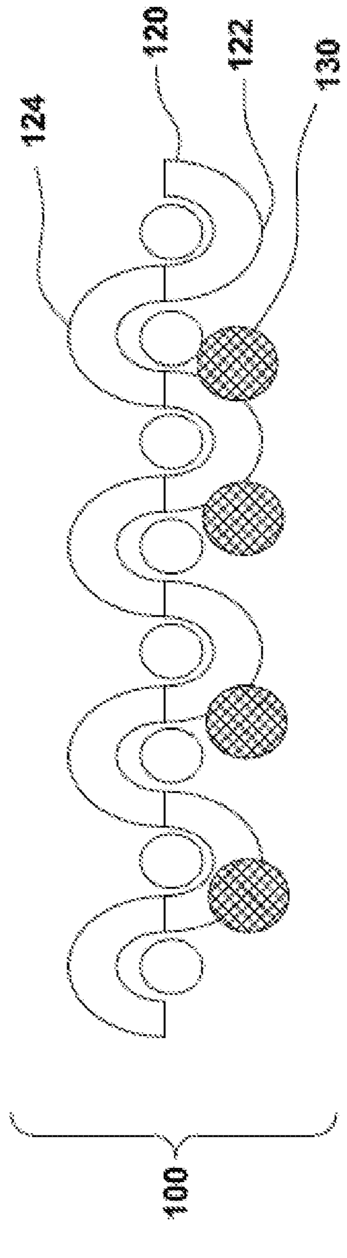


FIG. 1

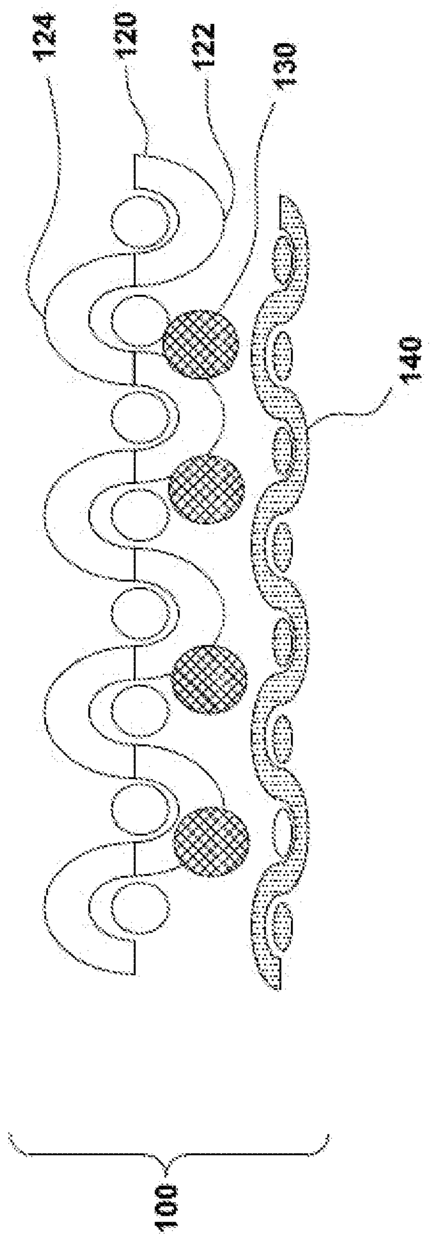


FIG. 2

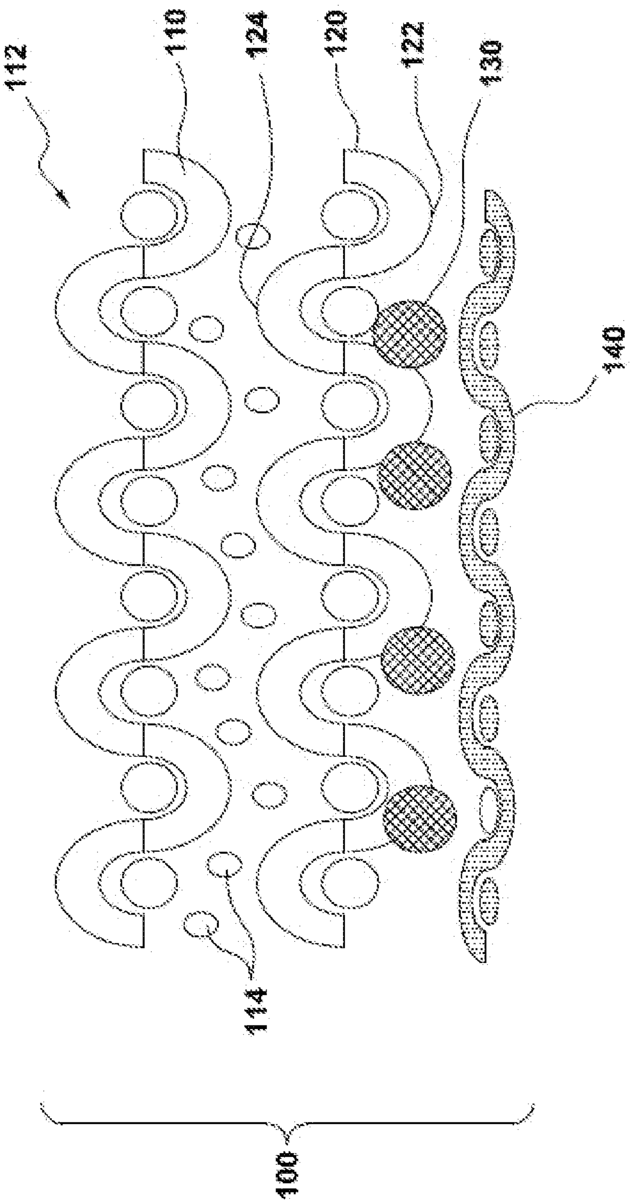


FIG. 3

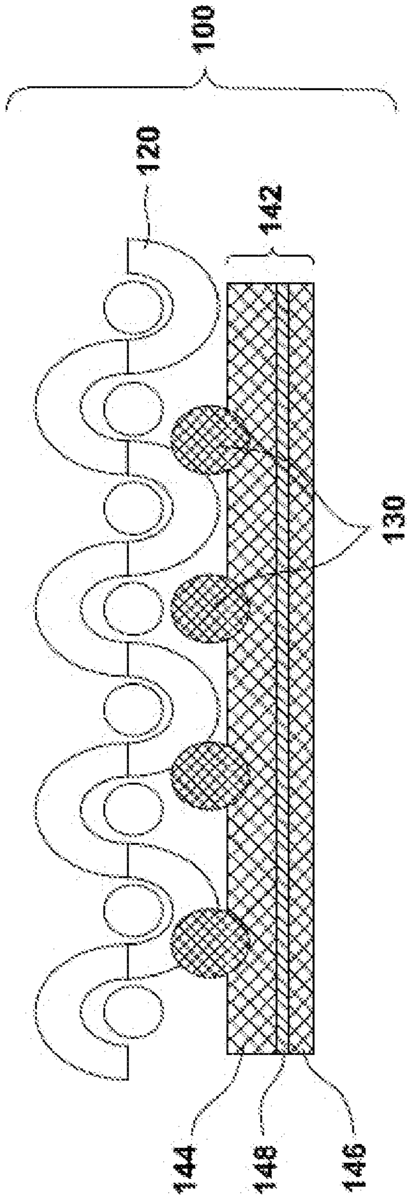


FIG. 4

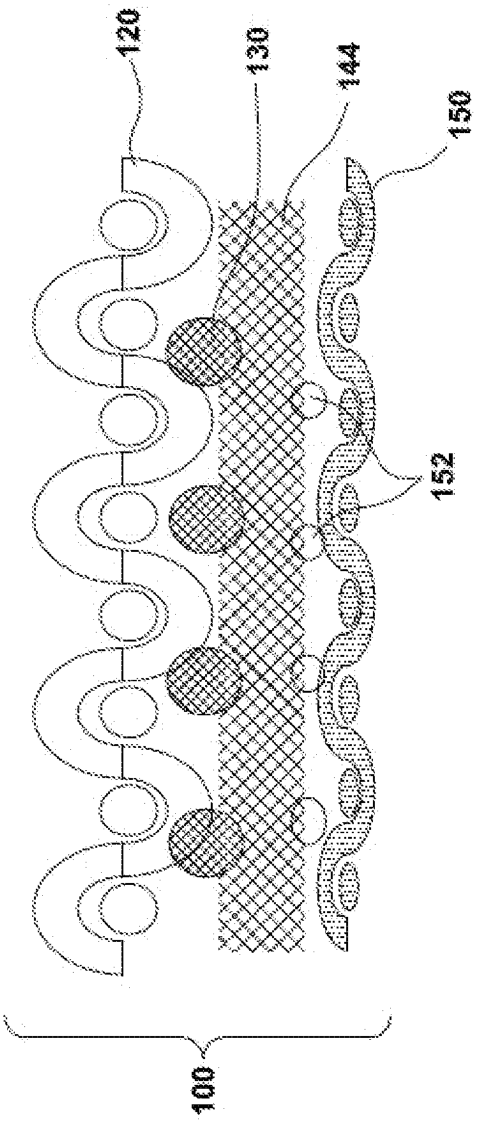


FIG. 5

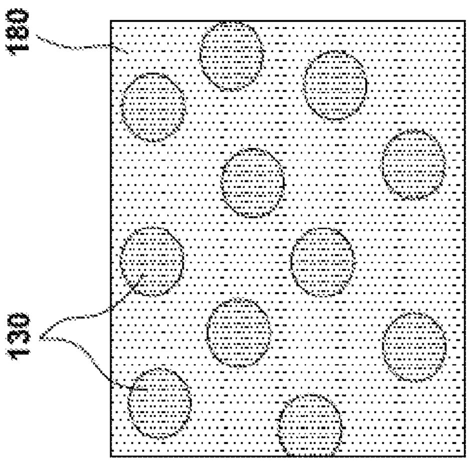

FIG. 6A

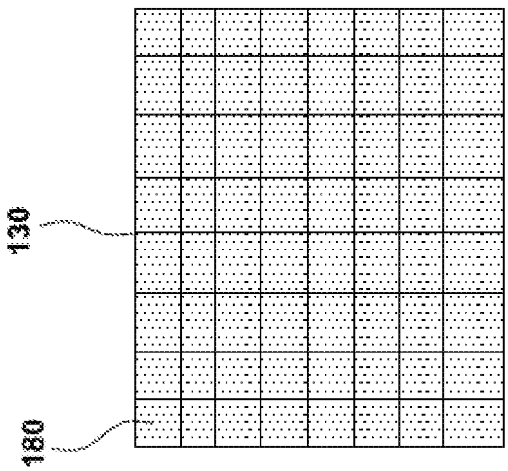

FIG. 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090110919 A
- US 2013004747 A
- WO 2009055046 A
- US 4862730 A, Crosby
- US 4532316 A